## Europäisches Patentamt

## European Patent Office

## Office européen des brevets

(19)

(11) Veröffentlichungsnummer: **0 327 907**
**B1**

(12) # EUROPÄISCHE PATENTSCHRIFT

(45) Veröffentlichungstag der Patentschrift:
**13.06.90**

(51) Int. Cl.⁵: **A01C 7/04**

(21) Anmeldenummer: **89101488.8**

(22) Anmeldetag: **28.01.89**

(54) **Landwirtschaftliche Kombinationssämaschine.**

(30) Priorität: **04.02.88 DE 3803264**

(43) Veröffentlichungstag der Anmeldung:
**16.08.89 Patentblatt 89/33**

(45) Bekanntmachung des Hinweises auf die Patenterteilung:
**13.06.90 Patentblatt 90/24**

(84) Benannte Vertragsstaaten:
**BE DE ES FR NL**

(56) Entgegenhaltungen:
**FR-A- 2 384 690**

(73) Patentinhaber: **Amazonen-Werke H. Dreyer GmbH & Co. KG, Am Amazonenwerk 9-13,
D-4507 Hasbergen-Gaste(DE)**

(72) Erfinder: **Scheufler, Bernd, Dr., Am Amazonenwerk 101,
D-4507 Hasbergen(DE)**

EP 0 327 907 B1

## Beschreibung

Die Erfindung betrifft eine landwirtschaftliche Kombinationssämaschine gemäß Oberbegriff des Patentanspruches 1.

Eine derartige, aus einer pneumatischen Einzelkornsämaschine und einem pneumatischen Mikrogranulatstreuer bestehende landwirtschaftliche Kombinationssämaschine ist bereits durch den Prospekt "Pneumatisches Gemüseeinzelkornsägerät" mit dem Druckvermerk 01.86 der Firma Nodet Gougis bekannt. Die Vereinzelungsorgane dieser Einzelkornsämaschine werden mit von einem Saugluftgebläse erzeugten Unterdruck beaufschlagt, wobei das von der an die Einzelkornsämaschine angekoppelten Verteilmaschine dosierte Material mittels von einem zusätzlichen Gebläse erzeugten Druckluftstrom zu den Säscharen gefördert wird. Hierbei sind Saug- und Druckluftgebläse jeweils hintereinander auf einer gemeinsamen Antriebswelle gelagert.

Zur Düngemittelförderung ist also die Anordnung eines zusätzlichen separaten Gebläses auf der landwirtschaftlichen Kombinationssämaschine notwendig, was aus fertigungstechnischen Gründen als sehr aufwendig und teuer anzusehen ist, da zwei komplett ausgebildete Gebläse auf der Kombinationssämaschine anzuordnen sind.

Der Erfindung liegt nun die Aufgabe zugrunde, mit einfachsten Maßnahmen die Druckluftförderung von Material bei der gattungsgemäßen Maschine zu erreichen.

Diese Aufgabe wird in erfindungsgemäßer Weise durch die Maßnahme gemäß des Kennzeichens des Anspruches 1 gelöst. Infolge dieser Maßnahmen wird auf einfachste Weise die von dem bereits vorhandenen Gebläse der Einzelkornsämaschine erzeugten Druckluft dazu genutzt, den von der Verteilmaschine dosierten Dünger zu den äußeren Düngersäscharen zu blasen. Es ist kein zusätzliches Gebläse erforderlich.

Außerdem kann auf Düngerbehälter direkt oberhalb der Düngersäschare verzichtet werden.

Infolge dieser Maßnahme läßt sich das zur Erzeugung des Unterdruckes für die Vereinzelungsorgane der Einzelkornsämaschine notwendige Saugluftgebläse auf einfachste Weise gleichzeitig zur Erzeugung eines Druckluftstromes für die pneumatische Förderung von Düngemitteln oder dergleichen aus dem Vorratsbehälter der Verteilmaschine zu den Säscharen nutzen. Auf ein zusätzliches Gebläse zur Erzeugung eines Druckluftstromes kann also verzichtet werden, so daß der fertigungstechnische und konstruktive Aufwand entscheidend verringert wird, wodurch die Herstellkosten reduziert werden.

Durch die FR-A 2 384 690 ist eine Kombinationssämaschine, bestehend aus einer pneumatischen Sämaschine, insbesondere Einzelkornsämaschine, deren Vereinzelungsorgan mit einem Druckluftgebläse verbunden ist, und einer weiteren, an der Sämaschine angekoppelten Verteilmaschine, wie Düngerstreuer oder Mikrogranulatstreuer ect., bekannt, wobei das von dieser Verteilmaschine dosierte Material ebenfalls über den von dem Gebläse erzeugten Druckluftstrom durch die Förderschläuche zu den Ausbringelementen gefördert wird. Bei dieser bekannten Maschine ist das Gebläse als Druckluftgebläse ausgebildet, wobei beide Maschinen an einem gemeinsamen Druckluftanschluß des einzigen Gebläses angeschlossen sind.

Zur Erzeugung des erforderlichen Druckluftstromes ist bei einer weiteren Ausführungsform erfindungsgemäß vorgesehen, daß der (die) Druckluftanschlu(e)ss(e) außerhalb des Ausblaßbereiches des Saugluftgebläses an dem Saugluftgebläse angeordnet ist sind. Hierdurch wird erreicht, daß mittels des rotierenden Gebläseläufers des Saugluftgebläses aus den Vereinzelungsorganen angesaugte und innerhalb des Gebläsegehäuses nach außen verdrängte Luftstrom nicht nur in seinem Ausblaßbereich das innere des Gebläsegehäuses verlassen kann, sondern auch durch die Druckluftanschlüsse, wodurch die durch die Druckluftanschlüsse entwichene Luft den zur Förderung des Materials aus dem Vorratsbehälter benötigten Druckluftstrom bildet. Wesentlich hierbei ist, daß durch diese spezielle Anordnung der Druckluftauslässe an dem Saugluftgebläse die Saugleistung nicht oder nur unwesentlich beeinträchtigt wird.

Es ist in erfindungsgemäßer Weise vorgesehen, daß nur für die außerhalb des von dem Vorratsbehälter seitlich begrenzten Bereiches angeordneten Säschare ein Druckluftanschluß sowie eine pneumatische Förderung des Dosiermaterials vorgesehen ist.

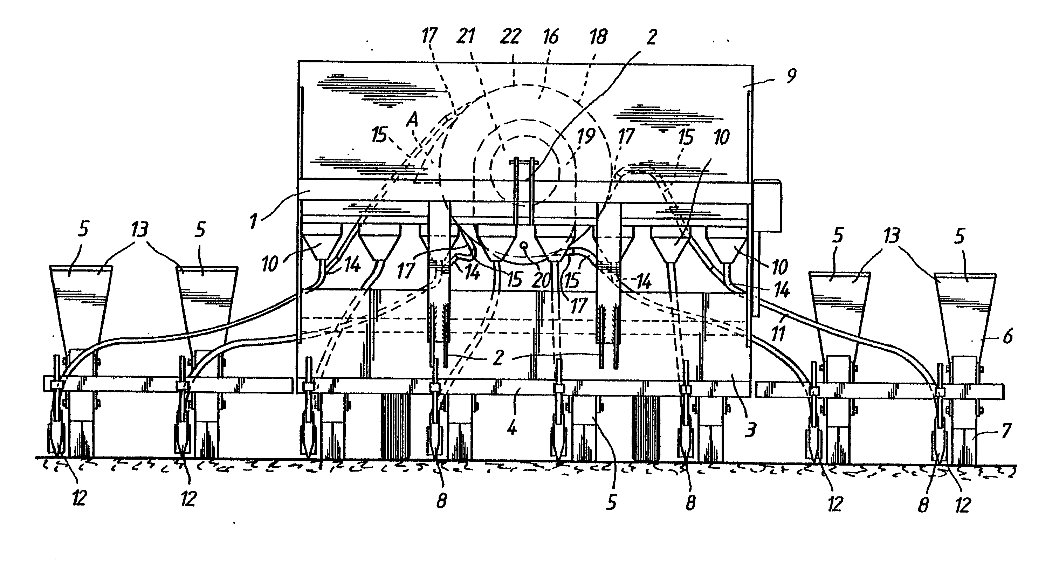

Weitere Einzelheiten der Erfindung sind der Beispielsbeschreibung und der Zeichnung zu entnehmen. Hierbei zeigt die Zeichnung eine in erfindungsgemäßer Weise ausgerüstete landwirtschaftliche Kombinationssämaschine in Prinzipdarstellung und in der Ansicht von vorne.

Die landwirtschaftliche Kombinationssämaschine weist den Rahmen 1 auf, an dessen Vorderseite die Dreipunktkupplungselemente 2 angeordnet sind. Die Dreipunktkupplungselemente 2 sind weiterhin mit dem Rahmenteil 3 verbunden, an dem auch das Tragrohr 4, an dem die einzelnen, nebeneinander angeordneten Einzelkornsäaggregate 5 befestigt sind. Diese Einzelkornsäaggregate sind über parallelogrammartige Halterungen in bekannter und daher nicht näher dargestellter Weise dem Tragrohr 4 angelenkt. Jedes Einzelkornsäaggregat 5 weist einen Vorratsbehälter 6 und nicht näher dargestellte, mit Saugluft beaufschlagte Vereinzelungsorgane für das sich im Vorratsbehälter 6 befindliche Saatgut, das jeweilige Säschar 7 und die hinter dem Säschar 7 angeordnete Druckrolle auf. Jedem Einzelkornsäaggregat 5 ist ein Düngersäschar 8 zugeordnet. Diesen Düngersäscharen 8 werden die sich im zentralem Vorratsbehälter 9 befindlichen Düngemittel in genau einstellbaren Mengen über die einzelnen Trichter 10, an denen sich die Förderleitungen 11 anschließen zugeführt. Die Förderung der sich im Vorratsbehälter 9 befindlichen Düngemittel zu den außerhalb des von dem Vorratsbehälter 9 seitlich begrenzten Bereiches angeordneten Düngersäschare 12 erfolgt mittels pneumatischer Förderung, da es nur begrenzt möglich ist, diese außerhalb des vom Vorratsbehälter 9 begrenzten Bereiches angeordneten Düngersäschare 12 der äußeren Einzelkornsäaggregate 13 mittels Schwerkraftförderung mit Düngemitteln zu versorgen. Hierzu weisen die diesen Düngersäscharen 12 zugeordneten Förderleitungen II Anschlußstücke 14 auf, an die sich die Druckluftleitungen 15 anschließen. Diese Druckluftleitungen 15 sind wiederum an den außerhalb des Ausblasbereiches A des Saugluftgebläses 16, welches hinter dem zentralen Vorratsbehältern 9 angeordnet ist, sich befindlichen Druckluftanschlüssen 17 angeschlossen. Die Druckluftanschlüsse 17 sind am äußeren Umfang des Gebläsegehäuses 18 angeordnet. Das Saugluftgebläse 16 wird über das Vorgelegegetriebe 19 mittels der Antriebswelle 20 von der Zapfwelle des die Kombinationssämaschine transportierenden Ackerschleppers angetrieben. Mittels des sich im inneren des Gebläsegehäuses 18 befindlichen Gebläseläufers des Sauggebläses 16 werden die Vereinzelungsorgane der einzelnen Einzelkornsäaggregate 5 mit Unterdruck beaufschlagt, wobei die einzelnen, zu den jeweiligen Vereinzelungsorganen führenden, nicht näher dargestellten Luftleitungen an den Saugluftanschluß 21 des Saugluftgebläses 16 angeschlossen sind. Durch die Rotation des Gebläseläufers wird den jeweiligen Vereinzelungsorganen Luft entzogen, so daß ein Unterdruck entsteht, wobei im Bereich des Ansaugstutzens 21 die Luft abgesaugt und durch die Beschaufelung des Gebläseläufers nach außen, in Richtung der Wandung 22 des Gebläsegehäuses 18 gedrückt wird, so daß in diesem Bereich ein Überdruck entsteht. Die Wandung 22 des Gebläsegehäuses 18 weist an einer nicht näher dargestellten Stelle den bei Saugluftgebläsen bekannten Ausblaßbereich A auf, durch welchen die aus den Vereinzelungsorganen angesaugte Luft entweichen kann. Im äußeren Bereich der Wandung 22 sind die Druckluftanschlüsse 17 derart angeordnet, daß die aus dem Vereinzelungsorganen angesaugte Luft ebenfalls durch diese Druckluftanschlüsse 17 aus dem inneren des Gebläsegehäuses 18 des Sauggebläses 16 entweichen kann, wodurch in den Druckluftleitungen 15 ein Überdruck entsteht, der zur pneumatischen Förderung des Dosiermaterials aus dem Vorratsbehälter 9 zu den äußeren Einzelkornsäaggregaten 13 ausgenutzt wird.

**Patentansprüche**

1. Landwirtschaftliche Kombinationssämaschine, bestehend aus einer pneumatischen Sämaschine, insbesondere Einzelkornsämaschine, deren Vereinzelungsorgane mit einem Gebläse (16) verbunden sind, und einer weiteren, an die Sämaschine angekoppelten Verteilmaschine, wie Düngerstreuer oder Mikrogranulatstreuer etc., wobei das von dieser Verteilmaschine dosierte Material zumindest teilweise mittels von dem Gebläse (16) erzeugten Druckluftstrom durch Förderschläuche (11) zu den Ausbringelementen, wie beispielsweise Säscharen förderbar ist, dadurch gekennzeichnet, daß das Gebläse (16) an dem die Vereinzelungsorgane der Sämaschine und die Förderschläuche (11) angeschlossen sind, als Sauggebläse (16) ausgebildet ist, daß die Vereinzelungsorgane über Schläuche, die an den Saugluftanschluß (21) des Sauggebläses angeschlossen sind, mit dem von dem Sauggebläse (16) erzeugten Unterdruck beaufschlagbar sind, daß an dem Sauggebläse (16) zusätzlich zu dem Saugluftanschluß (21) zumindest ein Druckluftanschluß (17) vorgesehen ist, der mit den Förderschläuchen (11) für das von der Verteilmaschine dosierte Material verbunden ist.

2. Kombinationssämaschine nach Anspruch 1, dadurch gekennzeichnet, daß der (die) Druckluftanschlu(e)ss(e) (17) außerhalb des Ausblaßbereiches des Sauggebläses (16) an dem Sauggebläse (16) angeordnet ist (sind).

3. Kombinationssämaschine nach Anspruch 1, dadurch gekennzeichnet, daß nur für die außerhalb des Vorratsbehälter (9) seitlich begrenzten Bereiches angeordneten Säschare (12) ein Druckluftanschluß (17) sowie eine pneumatische Förderung des Dosiermateriales vorgesehen ist.

**Claims**

1. Combined agricultural seed drill, including a pneumatic seed drill, more especially a seed drill for sowing single seeds, the singling-out members of which seed drill are connected to a fan (16), and an additional distributor, such as a fertilizer broadcaster or an apparatus for broadcasting microgranulated material, etc., which is attached to the seed drill, wherein the material, which is metered by this distributor, is at least partially conveyable, by means of a stream of compressed air produced by the fan (16), through conveyor tubes (11) to the distribution elements, such as sowing coulters for example, characterised in that the fan (16), with which the singling-out members of the seed drill and the conveyor tubes (11) communicate, is a suction fan (16), in that the singling-out members are actuatable by means of the low pressure, produced by the suction fan (16), via tubes which communicate with the intake-air connection (21) of the suction fan, in that, in addition to the intake-air connection (21), at least one compressed-air connection (17) is provided on the suction fan (16) and is connected to the conveyor tubes (11) for the conveyance of the material which is metered by the distributor.

2. Combined seed drill according to claim 1, characterised in that the compressed air connection(s) (17) is (are) disposed on the suction fan (16) externally of the exhaust region of the suction fan (16).

3. Combined seed drill according to claim 1, characterised in that only one compressed air connection (17) and one pneumatic means for feeding the metered material are provided for the sowing coulters (12) disposed externally of the region laterally defined by the feed hopper (9).

**Revendications**

1. Semoir-épandeur agricole, combiné, composé d'un semoir pneumatique notamment d'un semoir de précision dont les organes-séparateurs sont reliés à un ventilateur (16) ainsi qu'un autre épandeur couplé au semoir comme un épandeur d'engrais ou un épandeur de microgranulés etc., la matière dosée par cet épandeur étant au moins partiellement transférable par le courant d'air comprimé créé par le ventilateur (16) à l'aide de tuyaux de transfert (11) vers les éléments-distributeurs comme par exemple des socs de semoir, machine caractérisée en ce que le ventilateur (16) auquel sont reliés les organes-séparateurs du semoir et les tuyaux de transfert (11) est un ventilateur aspirant (16), des organes-séparateurs étant soumis à la dépression créée par le ventilateur-aspirateur (16) par des tuyaux d'aspiration d'air (21) reliés au ventilateur-aspirateur, et au moins un raccord d'air comprimé (17) est prévu sur le ventilateur-aspirateur (16) en plus du raccord d'aspiration d'air (21), raccord d'air comprimé qui est relié aux tuyaux de transfert (11) des produits dosés par l'épandeur.

2. Semoir-épandeur combiné selon la revendication 1, caractérisé en ce que le ou les raccords d'air comprimé (17) se trouvent à l'extérieur de la zone d'éjection du ventilateur-aspirateur (16) sur cet aspirateur (16).

3. Semoir-épandeur combiné selon la revendication 1, caractérisé en ce qu'un raccord d'air comprimé (17) ainsi qu'un transfert pneumatique du produit dosé sont prévus seulement pour les socs de semoir (12) situés latéralement par rapport à la zone limitée par le réservoir (9).